Europäisches Patentamt

European Patent Office

Office européen des brevets

(19)

(11) Publication number: **0 021 744**

**A1**

(12) # EUROPEAN PATENT APPLICATION

(21) Application number: **80301993.4**

(22) Date of filing: **13.06.80**

(51) Int. Cl.³: **C 01 B 19/00**

(30) Priority: **14.06.79 CA 329749**

(43) Date of publication of application:
**07.01.81 Bulletin 81/1**

(84) Designated Contracting States:
**BE DE GB**

(71) Applicant: **Inco Limited
1 First Canadian Place
Toronto Ontario M5X 1C4(CA)**

(72) Inventor: **Victorovich, Grigori Semion
3025 Credit Woodlands Suite 225
Mississauga Ontario L5C 2V3(CA)**

(72) Inventor: **Sridhar, Ramamritham
No 18 K. R. Iyengar Road 1st Street
Alarpet Madras 600 018(IN)**

(72) Inventor: **Bell, Malcolm Charles Evert
574 Patricia Drive
Oakville Ontario L6K 1M2(CA)**

(74) Representative: **Greenstreet, Cyril Henry et al,
Thames House Millbank
London SW1P 4QF(GB)**

(54) **Process for the recovery of selenium.**

(57) Selenium-bearing materials are treated to recover selenium in a water soluble form by a process comprising the steps of forming an aqueous slurry of the material with an alkali metal carbonate, at least 30% of the total weight of the slurry being water and the water content being sufficient to dissolve all or most of the alkali metal carbonate; continuously feeding the slurry to a hot agitated pellet bed maintained in a heated pelletiser at a temperature in the range from 60 to 120°C; retaining the pellets in the bed for long enough to form a wet pellet product having a pellet size not greater than 30 mm; drying and roasting the pellets in an atmosphere containing free oxygen; and leaching the roasting pellets with water.

EP 0 021 744 A1

Croydon Printing Company Ltd.

- 1 -

## Process for the
## recovery of selenium

This invention relates to the recovery of selenium from selenium-bearing materials.

Most selenium is obtained commercially from selenium-bearing materials which are by-products of other metallurgical or chemical processes. These materials are, for example, slimes, sludges, muds, or dust in which selenium is concentrated with other valuable elements, e.g. tellurium, silver, gold and platinum group metals. The method selected to extract the selenium from a given material will depend on such factors as its composition, the form in which the selenium is present, availability of reagents, cost and environmental considerations. Details of many processes now in use are given in books such as "Selenium", edited by R A Zingaro, pp. 31-60, (1974), "Selenium and Selenides" by D M Chizhikov et al, pp. 57-115, (1968), "The Chemistry and Technology of Selenium and Tellurium" by A A Kudryavtsev, pp. 189-205, (1974) and in articles such as "Treatment of Electrolytic Copper Refining Slimes", by J H Schloen et al, Journal of Metals, No 5 pp. 764-777, (1950).

The most important source of selenium at the present time is anode slimes from electrolytic copper refining. Such slimes are often given a preliminary treatment to remove copper, for example by treating them with strong sulphuric acid at an elevated temperature. This gives good copper extraction, decreases the total amount of material to be treated for selenium extraction, and increases its selenium content.

In one conventional process for treating copper refinery slimes, the raw or decopperized slimes are mixed with soda ash (sodium carbonate) and then roasted in an oxidizing atmosphere to convert selenium to water-soluble sodium selenite or selenate, which can then be leached. Selenium is recovered from the leach liquor by a number of known techniques. It has been recognized that this process requires very intimate mixing of the selenium-containing particles with soda ash, a sufficient and continuous supply of oxygen reaching all the particles, and careful control of temperature so as to avoid fusion which would prevent oxygen from penetrating the material. To prevent volatilization of selenium oxide it is also necessary to provide sufficient soda to convert all the oxidized selenium to a non-volatile, water soluble selenite or selenate.

Attempts to meet these requirements are described in US Patents Nos 2,948,591 and 2,981,603, which disclose processes in which agglomerates are formed from pasty mixtures of the anode slimes and soda ash. While this technique is suitable for treating dry materials, it is not suitable for wet selenium-bearing material containing sulphuric acid or other sulphates, particularly those of copper, nickel, iron, cobalt, lead, and calcium. This is because the soda ash reacts readily with the sulphuric acid or other sulphates to form sodium sulphate, which is of no use for the formation of the water soluble selenium compounds during roasting. In addition, the amount of soda left to react with selenium oxides becomes unknown. Furthermore, it is impractical to mix the wet selenium-bearing slimes containing sulphuric acid with the alkali metal compounds needed for the roasting. Mixing $Na_2CO_3$ and/or NaOH with the wet slimes containing $H_2SO_4$ releases a large amount of heat due to neutralization of the $H_2SO_4$, and the mixture swells out because of $CO_2$ evolution when $Na_2CO_3$ is added, or it gets more moist with $H_2O$ formed when NaOH is used. Also, the mixture sputters, contaminating the surroundings, as a consequence of either the $CO_2$ evolution or steam generation. In either case, the heat of the sulphuric acid neutralization may raise the temperature of the mixture to the point where oxidation of elemental selenium becomes possible, i.e. slightly above $200^{\circ}$C. This highly exothermic oxidation to $SeO_2$ tends to proceed so fast that the heat developed cannot be dissipated readily, and the temperature continues to rise. As a result it is not possible to achieve good mixing and there is a danger of $SeO_2$ volatilization.

- 3 -

The processes of the US patents are also unsuitable for use with materials in which the selenium is present mainly as elemental selenium and silver selenide. With such materials there is also a danger of $SeO_2$ volatilization since silver selenide is quite resistant to air oxidation up to $400^{\circ}C$ while elemental selenium is oxidized, and can even ignite, slightly above $200^{\circ}C$. There is no clue in either of the aforementioned patents on how all the chemical reactions involved may be completed while keeping the $SeO_2$ from volatilizing.

Moreover, at temperatures above $400^{\circ}C$, and especially at about $500^{\circ}C$, silver selenide can readily form silver selenite, $Ag_2SeO_3$, which is known to melt at about $530^{\circ}C$ and decompose at $550-700^{\circ}C$. When other compounds are present silver selenite may melt at even lower temperatures, thereby obstructing oxidation. Yet another problem, which occurs when the selenium-bearing materials have Se and Ag contents somewhat above 10% each, is that access of oxygen may be hindered by the larger molar volume of sodium selenite and/or selenate formed as compared with sodium carbonate consumed.

The present invention is based on the discovery that these problems may be overcome if, instead of forming the selenium-bearing material and sodium carbonate into a pasty mixture which is then agglomerated, they are formed into an aqueous slurry, i.e. an aqueous mixture having a fluid consistency, which is then converted into pellets in a heated pelletiser under controlled conditions.

According to the invention, a process for the recovery of selenium from a selenium-bearing material in which the selenium values are rendered water-soluble by reaction with alkali metal carbonate comprises the steps of forming an aqueous slurry of the material with an alkali metal carbonate, at least 30% of the total weight of the slurry being water and the water content being sufficient to dissolve all or most of the alkali metal carbonate; continuously feeding the slurry to a hot agitated pellet bed maintained in a heated pelletiser at a temperature in the range $60-120^{\circ}C$;

- 4 -

retaining the pellets in the bed for long enought to form a wet pellet product having a pellet size not greater than 30 mm; drying and roasting the pellets in an atmosphere containing free oxygen; and leaching the roasted pellets with water.

While any alkali metal carbonate may be used, for reasons of availability and cost sodium carbonate (in practice soda ash) is preferred, and the alkali metal will be referred to hereinafter as sodium.

The process of the invention is particularly suitable for use with selenium-bearing materials that contain sulphuric acid and/or one or more non-ferrous base metal values, e.g. nickel, copper, cobalt and lead. When these are present, it is preferred to adjust the pH of the slurry, by means of an alkali addition, to neutralise the free acid and precipitate the base metals, before adding the amount of sodium carbonate desired to react with the selenium values present and feeding the slurry to the pelletiser. The preliminary neutralisation in the slurry avoids the problems that arise when it takes place in a pasty mixture, and the heat of neutralisation evolved is in fact an advantage in helping to dissolve the main part of the sodium carbonate.

The use of a slurry to form agglomerates of the selenium-bearing material and sodium carbonate by pelletisation is the key to the many advantages that can be obtained by means of the preferred features of the process described hereafter. In particular, it eliminates the need for preliminary operations such as washing, settling, filtration or evaporation, and drying before the slimes are mixed with soda and the mixture is agglomerated. It also enables selenium-bearing materials which contain elemental selenium and silver selenide in any proportion to be efficiently treated, and allows efficient control over the soda necessary for the formation of water soluble compounds of selenium. It permits the production of pellets which have very high percentage of porosity (e.g. up to 50%), uniform blending of all the constituents, and very good compressive strength, a combination which ensures complete

- 5 -

conversion of selenium values to water soluble state during roasting with minimal dusting. Another major advantage is that the process can be carried out with negligible losses of selenium to the gas phase during roasting along with almost complete selenium extraction during water leaching irrespective of the selenium content of the selenium-bearing materials.

The invention will now be described in more detail in conjunction with preferred embodiments.

The selenium-bearing materials, e.g. raw anode slimes of electrolytic copper refining, decopperized anode slimes of the same origin, sludges, muds, dusts; residues of hydrometallurgical processing, some intermediates of metallurgical production and beneficiation and the like, are slurried in water or in a water solution containing valuable elements, for instance, in scrubber solution from waste gas cleaning.

The pH of the slurry is adjusted, if necessary, to neutralize free acid and precipitate water insoluble compounds of non-ferrous base metals, for example, copper nickel, cobalt and lead by additions of appropriate neutralizers such as hydroxides or carbonates of alkali and/or alkaline earth metals. Preferably soda ash is used as the neutralizing agent. If copper is present, for example, the pH is raised to about 3.5 to 5.5, if nickel is present the pH is raised to about 4.5 to 6.5, if cobalt is present the pH is raised to about 5.5 to 7.5. Preferably, when such base metals are present neutralization of the slurry is to a pH of about 6.5 to 7.5. In the absence of base metals neutralization should be to a pH of not less than about 2.

The neutralized slurry is then mixed with sodium carbonate preferably in the form of soda ash, in the molar proportion of sodium carbonate:Se of at least about 1.8:1 but not more than about 3.0:1, preferably about 2 to 2.5. When an appreciable amount of tellurium is present, then the molar proportions should be with respect to selenium plus tellurium. Part of the sodium carbonate may be replaced by equivalent amounts of sodium bicarbonate (up to 50 equivalent %) and/or sodium nitrate (up to 10 equivalent %). Partial replacement of the sodium carbonate by sodium bicarbonate helps to obtain a pellet product with higher moisture. Moreover, sodium bicarbonate decomposes at a temperature of about $160^{\circ}C$ to about $190^{\circ}C$ with evolution of $CO_2$ and $H_2O$, thereby providing additional porosity in the dried pellets, thus facilitating oxidation of selenium and its compounds. Addition of sodium nitrate is recommended particularly when selenium-bearing materials contain large amounts of elemental selenium.

The final slurry produced after neutralization and addition of the sodium carbonate must be fluid enought for stirring and pumping by conventional devices used in hydrometallurgy. It must contain at least about 30 wt. % of water in which more than about 50% of the sodium compounds are dissolved. If necessary, water can be added to ensure this. Preferably the water content of the final slurry fed on the heated pelletizer is about 40 to 50 weight % $H_2O$. In order to use the minimum amount of water and have most of the sodium compounds dissolved, the temperature of the final slurry is preferably maintained above $40^{\circ}C$, e.g. from 40 to $60^{\circ}C$.

The final slurry is then continously fed on to a bed of hot pellets which are agitated on a pelletizer. A rotary disc, rotary cone or rotary drum may be used as the pelletizer. Any conventional pelletizing device may be used provided it is equipped with a source of heat to maintain the temperature of the agitated pellets at a temperature above about $60^{\circ}C$ and below about $120^{\circ}C$, preferably between $80^{\circ}$ or $85^{\circ}C$ and $100^{\circ}C$. Below $80-85^{\circ}C$ the moisture does not evaporate fast enough and the pellets may lump together. If the pellets are formed above $120^{\circ}C$, the pellets tend to become too dense for good oxygen penetration during roasting and selenides may form which remain unoxidized in the core of the pellets, so that leaching of Se becomes more difficult.

The pelletizer can be heated in any convenient

manner, for example, by means of electrical heaters installed at the bottom and/or walls of the disc, cone or drum, heating them on the outside to a temperature from about $300^{\circ}C$ to about $600-800^{\circ}C$. Additionally, infrared lamps can be positioned above the pellet bed so that the necessary heat is also supplied to the pellet bed by direct radiation. A stream of hot gases directed on to the bed can also be used to help maintain the required temperature of the pellets.

The final slurry is fed on to the hot pellet bed, preferably through a tube and dispersed (rather than poured as a continuous flow onto the same spot) to avoid agglomeration of the pellets into big lumps or clusters.

If a pelletizing disc is used, then small pellets and/or seed solids (nuclei) stratify to the bottom of the pelletizer and are retained on the latter for further growth, while the larger pellets migrate to the surface of the bed at the lower side of the disc and are discharged over the rim when they reach certain size within a quite narrow size range. Due to this auto-classification, the small pellets and/or seed solids, the finished larger pellets and the pellets of the intermediate size form an open structure, like a lady's open fan, in a pattern which shows the material in progress. This, in turn, makes it possible and necessary to disperse most of the final slurry selectively onto the seed solids and the pellets of small and intermediate size thereby providing their uniform growth.

When a pelletizing drum or cone is used, then the slurry feed should be distributed along the pelletizer axis so that the seed solids and the smaller pellets grow when they gradually travel toward the discharging end of the pelletizer.

When the final slurry gets on to the hot agitated pellet bed, it covers the individual hot pellets and seed solids with a thin layer, and then some part of water of the slurry evaporates from this layer. As a result of this evaporation, salts (e.g. sodium carbonate, bicarbonate and nitrate) present in the aqueous phase of the final slurry crystallize out forming on the surface of the pellets a new layer of a very-well blended, pelletized mixture of the solid selenium-bearing particles with the reagent crystals. Thus, the final fluid slurry turns into pellets which have a substantially sperical shape and are sufficiently strong to handle. The uniform distribution of the sodium compounds throughout the pellets facilitates their subsequent reaction with the selenium values.

In general, nuclei may be obtained immediately on the hot pelletizer by scraping off the solids being precipitated on the hot surfaces due to evaporation of the water of the slurry, or nuclei forming material may be purposely charged onto the pelletizer to provide better control over the size of the pellet product. It is particularly convenient to use some part of the solid residue obtained after the leaching of the roasted pellets to provide nuclei.

The conditions of pelletization, particularly the temperature of and residence time on the hot pelletizer, should be controlled and balanced so that the wet pellets produced are not larger than 30 mm, and preferably are less than 20 mm. Advantageously the mean pellet size is from 5 to 15 mm. The moisture content of the pellets should be above 10% and is preferably from 15 to 25%, based on the total weight of the freshly obtained pellets. In general, this can be achieved at a temperature of, preferably, about 85-100°C in about 15 to 30 minutes. The preferred higher moisture content leads to high microporosity upon subsequent drying of the pellets, which in turn, permits access of oxygen to the core of the pellets during roasting. This is essential for complete conversion of the selenium values to water soluble compounds.

Other parameters in the pellet bed that may influence the pellet formation are rotation speed, angle of inclination of the pellet bed, and amount of nucleating agents: those skilled in the art can take account of such variations without departing from the scope of this invention.

- 9 -

In order to render the selenium values water-soluble, the wet pellet product is dried and roasted in an atmosphere containing free oxygen, for instance in air.

The dried pellet product should be roasted between 350° and 500°C, preferably between 380° and 450°C, for long enough to convert most of the selenium into water soluble state. High microporosity of the dried pellets minimizes the roasting time and improves oxidation. Preferably the free oxygen-bearing gas phase used for roasting is supplied counter-currently to fresh pellets entering a roaster. Drying can be carried out as a separate operation, in which the drying temperature should not exceed about 200°C to avoid ignition of elemental selenium and self-heating of the pellets.

Heating of the dried pellets from 200°C up to the roasting temperature should be performed slowly, e.g. at an average rate of less than 20°C/min and preferably at about 3-6°C/min. Drying and roasting can also be performed in a single operation. In this case, the moist pellet product should also be slowly heated to the roasting temperature.

Control of the rate of heating up to the roasting temperature is particularly important if the selenium-bearing material contains both elemental selenium and silver selenide. Slow heating up from 200°C at which elemental selenium begins to oxidise to $SeO_2$ ensures that an adequate excess of sodium carbonate is available to react with the $SeO_2$, and thus prevent its escape as vapour, below the temperature at which sodium carbonate reacts with silver selenide. The availability of excess sodium carbonate is important since at these low temperatures the efficiency of its reaction with $SeO_2$ is rather low. When in the course of the slow heating the higher temperatures are reached at which silver selenide is oxidised, the efficiency of the reaction of sodium carbonate with $SeO_2$ is greater so the amount remaining is still adequate to react quickly with $SeO_2$ formed from silver selenide.

The calcine obtained after roasting the pellets is

- 10 -

then leached in water and the leach solution, and the solid residue can be further processed in conventional ways for the recovery of selenium and other elements such as tellurium, silver and platinum group metals. Several methods are disclosed in the aforementioned books and article.

The invention will now be further described with reference to some examples.

Example I

A filter cake of the following composition was obtained by treating raw anode slimes from electrolytic refining of copper with strong sulphuric acid (figures are % by weight).

| Se | Te | Cu | Ag | Pb | $SiO_2$ | $H_2SO_4$ | $H_2O$ | $H_2O$ Insolubles |
|------|------|------|------|-----|------|------|------|------|
| 19.8 | 0.43 | 1.67 | 16.1 | 4.0 | 8.26 | 14.5 | 24.8 | 59.4 |

This material had a thick paste-like consistency and was difficult to handle.

One hundred parts by weight of this cake were slurried with 50 parts by weight of water giving a fluid slurry. The pH of the slurry was adjusted to 7.5 using sodium hydroxide.

The neutralized slurry was mixed with 67 parts by weight of sodium carbonate, and the water content of the slurry was adjusted to 45 wt. %.

The molar ratio of sodium carbonate to selenium plus tellurium in the slurry was 2.5:1.

The slurry was continuously fed on to a hot disc pelletiser, the temperature of the pellet bed being about $97^{\circ}C$. The flow rate of the slurry was such that the mean residence time was about 25 minutes.

The pellets produced had a mean size of about 11 mm, and their moisture content after drying at $110^{\circ}C$ was in the range from 15.1 to 16.2 wt. %.

The pellets were further dried at a temperature below $200^{\circ}C$. The dried pellets were roasted in air at a temperature between $400^{\circ}$ and $450^{\circ}C$. The roasted pellets were then leached in hot water for 1 hour.

Three roasting tests using pellets having a size

- 11 -

of -6.7 +4.7 mm showed selenium recovery of 87.4, 92.6 and 98.8% after 1, 2 and 4 hours, respectively. Selenium losses to the gas phase were well below 0.1% of total selenium regardless of duration of roasting.

When pellets having sizes of -4.7 +3.4 and -12.7 +6.7 mm were roasted at the same temperature for 4 hours, the selenium recovery reached 99.0 and 98.9% respecitvely.

Example II

A sample of slimes having the same composition as that in Example I was slurried in water and treated as described in Example I, except that the molar ratio of sodium carbonate to selenium plus tellurium in the final slurry was 1.7:1 and the pellets produced had an average moisture content of 12.2 wt. %. The pellets were dried, roasted and leached in the same manner as Example I.

The pellets, which had a size of -6.7 +3.4 mm, showed selenium recovery of 66.3, 70.1, 80.2 and 82.4% after 1, 2, 4 and 8 hours, respectively. Selenium loss to the gas phase after 4 hours of roasting was 1.12%. Increasing the roasting temperature from $400^{\circ}$ -$450^{\circ}$ to $550^{\circ}$C increased the losses to 1.7%. Selenium recovery dropped to 50.3% after the 4 hour roasting.

This example illustrates the desirability of having a sodium carbonate:selenium plus tellurium ratio in the preferred range of 2:1 to 2.5:1.

Example III

The filter cake from Example I was washed with water to obtain the insoluble residue (59.4 wt. % of the cake). The dried insoluble residue was subjected to examination by microscope, electron probe and X-Ray diffraction analysis. It was found that most of the selenium was present as $Ag_2Se$ and elemental Se.

The residue was subjected to differental thermal analysis and thermal gravimetric analysis in air. It was found that elemental selenium began igniting at a temperature of $200^{\circ}$ to $220^{\circ}$C and that the selenium dioxide thus formed began to volatilise at a temperature of 260 to $300^{\circ}$C. Silver selenide began to oxidize at $410^{\circ}$ to $420^{\circ}$C.

- 12 -

It was also found that $SeO_2$ and $Na_2CO_3$ start reacting at a temperature about $100^O$ to $110^OC$, but even with 50% excess $NaCO_3$, the reaction does not proceed to completion until the temperature is raised to $350^O$ to $380^OC$.

This example shows that drying of the pellets should be carried out at a temperature which does not exceed $200^OC$. Otherwise, elemental selenium is rapidly oxidized and the selenium dioxide formed is volatilized. Also it shows that only the use of a high excess of alkali metal carbonate can prevent selenium dioxide volatilization at temperatures below $350^O$ to $380^OC$.

This example again demonstrates the desirability of using a molar ratio of $Na_2CO_3$ to Se or Se plus Te within the preferred range.

Example IV

Wet pellets produced from a material having the same composition as that of Example I, were treated in the same manner as described in Example I, but the pellet size was -4.7 +3.4 mm, and average pellet moisture was 7.3 wt. %. After 1, 4 and 8 hour roasting at $400^O$ to $540^OC$, the selenium recovery was 38.7, 69.1 and 72.3%, respectively.

When the moisture of the wet pellets was less than the preferred minimum it was found that some lead selenide formed. This was indicative of low porosity of the pellets and some blockage in the pellet core preventing oxygen penetration.

Using $NaHCO_3$ instead of part of the sodium carbonate in accordance with the invention with all other parameters equal produces wet pellets with a particularly preferred moisture content of 22-23 wt. %. When such pellets are dried they become highly porous and selenium extraction may be greater than 95%.

Example V

Pellets having a size of -3.4 +1.7 mm, were produced as described in Example I, and roasted for 2 hours at $550^OC$.

Selenium extractions were 88.9, 93.6 and 96.4% at

- 13 -

heating rates of $17^O$, $8.8^O$ and $4.4^OC$/min., respectively.

When the pellets were roasted at $550^OC$ in a preheated furnace for 4 hours, the selenium recovery was 86-92%.

This example illustrates the beneficial effect of the preferred slow heating rate.

- 14 -

CLAIMS

1      A process for the recovery of selenium from a selenium-bearing material in which the selenium values are rendered water soluble by reaction with alkali metal carbonate comprises the steps of forming an aqueous slurry of the material with an alkali metal carbonate, at least 30% of the total weight of the slurry being water and the water content being sufficient to dissolve all or most of the alkali metal carbonate; continuously feeding the slurry to a hot agitated pellet bed maintained in a heated pelletiser at a temperature in the range from 60 to 120°C; retaining the pellets in the bed for long  enough to form a wet pellet product having a pellet size not greater than 30 mm; drying and roasting the pellets in an atmosphere containing free oxygen; and leaching the roasted pellets with water.

2      A process as claimed in claim 1, wherein the alkali metal carbonate is sodium carbonate.

3      A process as claimed in claim 1 or 2, wherein the selenium-bearing material contains free acid and the pH of the slurry is adjusted to neutralize the acid prior to addition of the alkali metal carbonate.

4      A process as claimed in any preceding claim, wherein the selenium bearing material contains non-ferrous base metals and the pH of the slurry is adjusted to precipitate the metals prior to addition of the alkali-metal carbonate.

5      A process as claimed in claim 3 or 4 wherein the pH of the slurry is adjusted using a neutralizing agent comprising sodium carbonate.

6      A process as claimed in any one of claims 2 to 5 wherein sodium  carbonate is added to the aqueous slurry in an amount to provide a molar ratio of sodium carbonate to selenium in the range from 1.8:1 to 3.0:1.

7      A process as claimed in claim 6 wherein the molar ratio of sodium carbonate to selenium is in the range from 2:1 to 2.5:1.

8      A process as claimed in claim 6 or 7 wherein the selenium-bearing material contains tellurium and the molar proportion of sodium carbonate is calculated with respect to the molar proportion of selenium plus tellurium.

9      A process as claimed in any one of claims 2 to 8 wherein part of the sodium carbonate is replaced by one or both of sodium bicarbonate and sodium nitrate, the amount of sodium bicarbonate not exceeding 50 equivalent % of the sodium carbonate and the amount of sodium nitrate not exceeding 10 equivalent % of the sodium carbonate.

10      A process as claimed in any preceding claim wherein from 40% to 50% of the total weight of the slurry is water.

11      A process as claimed in any preceding claim wherein the slurry has a temperature of at least $40^{\circ}$C.

12      A process as claimed in any preceding claim wherein the agitated pellet bed is maintained at a temperature in the range from $85^{\circ}$ to $100^{\circ}$C.

13      A process as claimed in claim 12, wherein the pellets are withdrawn from the pelletiser at such a rate that the residence time for the pellets on the pellet bed is from 15 to 30 minutes.

14      A process as claimed in any preceding claim wherein the moisture content of the pellets is above 10 % by weight of the total weight of pellets.

15      A process as claimed in claim 14 wherein the moisture content of the pellets is in the range from 15 to 25 % of the total weight of the pellets.

16      A process as claimed in any preceding claim wherein the pellets are dried at a temperature below $200^{\circ}$C.

17      A process as claimed in any preceding claim wherein the pellets are roasted at a temperature in the range from $350^{\circ}$C to $500^{\circ}$C.

18      A process as claimed in claim 17 wherein the pellets are roasted at a temperature in the range from $380^{\circ}$C to $450^{\circ}$C.

19      A process as claimed in any preceding claim, wherein after drying the temperature is raised to the roasting temperature at a rate of from $3^{\circ}$ to $6^{\circ}$C per minute.

20    A process as claimed in any preceeding claim wherein drying and roasting of the pellets are carried out in a single operation and the wet pellets are heated to the roasting temperature at an average rate of less than $20^{\circ}C$ per minute.

0021744

| | European Patent Office | EUROPEAN SEARCH REPORT | Application number |
|---|---|---|---|
| | | | EP 80 30 1993.4 |

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |

| Category | Citation | Relevant to claim |
|---|---|---|
| D | US - A - 2 981 603 (S.B. TUWINER)<br>-- | |
| D | US - A - 2 948 591 (E.C. HANDWERK et al.)<br>-- | |
| D | JOURNAL OF METALS, Vol. 188, May 1950<br>J.H. SCHLOEN et al. "Treatment of Electrolytic Copper Refinery Slimes" pages 764 to 777<br>-- | |
| A | US - A - 3 627 486 (U. NAKANO)<br>-- | |
| A | GB - A - 1 176 661 (NORANDA MINES)<br>-- | |
| A | AUFBEREITUNGS-TECHNIK, No. 12, 1975 Wiesbaden<br>H.B. RIES "Granulaterzeugung in Mischgranulatoren und Granuliertellern" pages 639 to 646<br>---- | |

**CLASSIFICATION OF THE APPLICATION (Int. Cl.)**

C 01 B 19/00

**TECHNICAL FIELDS SEARCHED (Int.Cl.)**

B 01 J 2/00
C 01 B 19/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 02-10-1980 | KESTEN |

EPO Form 1503.1 06.78